# EUROPÄISCHE PATENTSCHRIFT

(11) **EP 0 682 231 B1**
(45) Veröffentlichungstag und Bekanntmachung des Hinweises auf die Patenterteilung: **21.04.1999**
(21) Anmeldenummer: 95250023.9
(22) Anmeldetag: 31.01.1995
(51) Int. Cl.: G01D 9/10

(54) **Einrichtung zur Aufzeichnung von Prozessdaten**
Device for recording of process data
Dispositif d'enregistrement des données de processus

(30) Priorität: 06.05.1994 DE 4416793
(43) Veröffentlichungstag der Anmeldung: 15.11.1995
(73) Patentinhaber: Hartmann & Braun GmbH & Co. KG, 65760 Eschborn (DE)
(72) Erfinder: Kirste, Hans-Herbert, D-31628 Landesbergen (DE)
(74) Vertreter: Meissner, Peter E., Dipl.-Ing.

(56) Entgegenhaltungen:
- DE-A- 3 919 220

## Beschreibung

Die Erfindung betrifft eine Einrichtung zur Aufzeichnung von Prozeßdaten, mit einem Gehäuse in welchem ein Erfassungssystem zur Entgegennahme der Prozeßdatensignale, eine Verarbeitungseinheit zur Verarbeitung bzw. Aufbereitung der Prozeßdatensignale, und eine Schreibeinrichtung zur Aufzeichnung der aufbereiteten Prozeßdaten angeordnet sind.

Eine Einrichtung der gattungsgemäßen Art ist beispielsweise aus der Prozeßleittechnik bekannt. Einrichtungen dieser Art dienen zum Erstellen von Prozeßprotokollen die den für den Betrieb einer Anlage verantwortlichen Personen den Prozeßablauf und etwaige Fehler ablesbar machen. Solche Einrichtungen sind darüber hinaus in den meisten Fällen mit einer Leitstelle verbunden, so daß eine entsprechende Korrespondenz auch zentral geführt werden kann.
Eine Einrichtung dieser Art ist aus dem Firmenprospekt 50/43-03/93DE von

Hartmann & Braun über einen 4fach-Linienschreiber bekannt.

Einrichtungen dieser Art beschränken sich auf die reine Prozeßüberwachung bzw. die Aufzeichnung der Prozeßdaten in chronologischer Weise. Somit kommen solchen Einrichtungen nur überwachende bzw. Protokollfunktionen zu. Es besteht jedoch im Anwendungsfall, beispielsweise bei einer Verknüpfung über eine Leitstelle die Möglichkeit, abhängig von den aufgezeichneten Prozeßdaten, weitere externe Prozeßregler anzusteuern. Bei Einrichtungen der bekannten Art ist es jedoch notwendig, die Regler jeweils als zusätzliche Geräte vorzusehen, die dann entweder die Schreiber direkt oder die Schreiber über die Leitstelle ansteuern (siehe beispeilsweise DE-A-3 919 220). Nachteiligerweise ergibt sich, daß bei Notwendigkeit der Aufzeichnung und des regelnden Eingriffs auf den Prozeß zwei Gerätegruppen, nämlich Schreiber und Regler notwendig sind. Dies macht erforderlich, daß vorort zwei separate Geräte installiert werden müssen, die elektrisch entsprechend miteinander korrespondierend verbunden werden müssen. Nachteiligerweise ergibt sicn somit, neoen der Notwendigkeit zwei Gerätegruppen anzuschaffen, auch ein hoher Installationsaufwand.

Der Erfindung liegt daher die Aufgabe zugrunde, eine Einrichtung zur Aufzeichnung von Prozeßdaten dahingehend weiter zu bilden, daß der Einsatz universeller ist und der Montageaufwand erheblich reduziert wird.

Die gestellte Aufgabe wird bei einer Einrichtung der gattungsgemäßen Art erfindungsgemäß dadurch gelöst, daß innerhalb des Gehäuses ein Regler integriert ist, welcher signalmäßig direkt mit dem Erfassungssystem verbunden ist und daß das Gehäuse einen oder mehrere Reglerausgänge aufweist. Weitere Ausgestaltungen sind in den abhängigen Ansprüchen angegeben.

Desweiteren umfaßt die Erfindung eine Verwendung einer solchen erfindungsgemäßen Einrichtung in einem Prozeßschreiber und in einem Prozeßregler.

Durch die Integration eines Reglers in das Gehäuse einer Einrichtung zur Aufzeichnung von Prozeßdaten ist die Aufgabe umfassend und vorteilhaft gelöst. Darüber hinaus ergeben sich aus den im kennzeichnenden Teil des Anspruches 1 angegebenen Merkmalen eine Reihe von Wirkungsweisen, die ebenfalls vorteilhaft sind und die Aufgabe in vielfältiger vorteilhafter Ausführbarkeit löst. So kann beispielsweise der Reoler direkt in der Verarbeitungseinheit integriert sein, die in weiterer Ausgestaltung eine elektronische zentrale Prozeßeinheit umfaßt, welche signalmäßig sowohl mit der Erfassungseinheit als auch mit der Schreibeinrichtung verbunden ist. Es ergibt sich hierdurch, daß nicht nur der Montageaufwand eines zusätzlichen Gerätes, nämlich eines Reglers, entfällt, sondern daß der Regler in eine derart einfachen Weise in die Einrichtung zur Aufzeichnung der Prozeßdaten integriert ist, daß kaum ein Mehraufwand in apparativer Hinsicht entsteht. Das heißt, ohne nennenswerten Mehraufwand erhält man zwei Gerätegruppen in einem Gerät bzw. in einem Gehäuse. Die Erfassungseinheit liefert die erfaßten Prozeßdatensignale sowohl zur weiteren Aufbereitung und letztendlichen Aufzeichnung der Prozeßdatensignale als auch direkt zum Regler. Bei Verwendung einer elektronischen zentralen Prozeßeinheit in der Verarbeitungseinheit ist es sogar möglich, sowohl die Schreiberfunktion als die Reglerfunktion softwaremäßig anlegen zu können. Dies bedeutet dann letztlich, daß in ein und demselben elektronischen Bauelement sowohl die Schreiber- als auch die Reglerfunktionen integriert sind. Das Gehäuse muß dabei nur einen oder mehrere zusätzliche Reglerausgänge enthalten.

Das heißt, gegenüber einer üblichen Einrichtung zur Aufzeichnung von Prozeßdaten ist das zusätzliche softwaremäßige Anlegen der Reglerfunktion sowie das Anlegen eines Reglerausganges die einzige apparative Maßnahme, um zwei Geräte, nämlich Schreiber und Regler in einem zu realisieren. Es entstehen durch diese Integration im übrigen Vorteile, die über den apparativen Aspekt und den Aspekt des Montageaufwandes hinausgehen. Es ergibt sich nämlich, daß die Signallaufzeiten und Reaktionszeiten auf Prozeßparameter-Änderungen extrem kurz sind und die Einrichtung somit den Prozeßablauf in entsprechender Weise besser absichert. Desweiteren ergeben sich durch die Integration von Schreiber- und Reglerfunktion in einem Gehäuse bzw. einem Gerät weitere Vorteile in der Aufbereitung der Meß- bzw. Prozeßsignale. Dabei weist die Einrichtung Funktionstasten zur Auswahl diverser matnematischer Aufbereitungsfunktionen aer Prozeßdaten auf, über welche beispielsweise sowohl die Schreiberfunktion als auch die Reglerfunktion beeinflußbar ist. Das heißt über ein und dieselben Funktionstasten läßt sich durch entsprechende Betätigung derselben nicht nur die Aufzeichnung der Prozeßdaten in beispielsweise radizierter oder differenzierter Form beeinflußen, sondern auch die Stellgrößen, die am Reglerausgang herausgegeben werden, sind über diese Funktionstasten entsprechend radizier-, differenzier- oder integrierbar. Die Einrichtung kann am Ausgang des Reglers einen entsprechenden Verstärker zur Verstärkung der ausgegebenen Stellgrößen enthalten. Vorteilhaft zeigt sich ebenfalls der ausgestaltungsmäßige Einsatz eines nichtflüchtigen SpeichereLementes in der Verarbeitungseinheit. Hier können sowohl die Schreiber- und Reglerprogramme als auch Prozeßdaten ab- oder zwischengespeichert werden.

Hinsichtlich der Verwendung der Einrichtung in einem Prozeßschreiber ergeben sich die vorstehend genannten Vorteile. Die Einrichtung ist ebenso vorteilhaft auch in einem Prozeßregler einsetzbar.

Die Erfindung ist in der Zeichnung dargestellt und im nachfolgenden näher beschrieben. Es zeigt:

Figur 1 eine übersicht der einzelnen Einrichtungskomponenten.

Figur 2 perspektivische Darstellung eines Prüzeßschreibers.

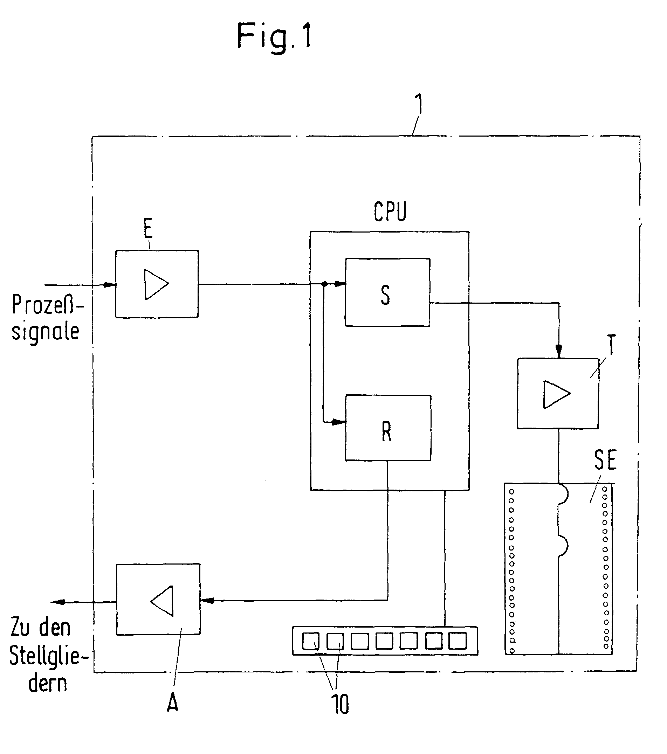

Figur 1 zeigt in Übersichtsdarstellung die einzelnen Systeme bzw. Einrichtungselemente in funktionaler Verbindung zueinander. Alle Einzelkomponenten sind innerhalb eines gemeinsamen Gehäuses 1 angeordnet, welche je nach Verwendung entweder das Prozeßschreibergehäuse oder das Reglergehäuse ist. Am Eingang der Einrichtung ist das Erfassungssystem E zur Aufnahme der Prozeßdatensignale vorgesehen. Dieses Erfassungssystem E kann entweder mit oder ohne Meßdatensignalverstärkung angelegt sein. Der Ausgang der Erfassungseinheit E ist signalmäßig mit dem Eingang der Verarbeitungseinheit CPU verbunden. Die Verarbeitungseinheit umfaßt eine zentrale Prozeßeinheit CPU, in welcher sowohl die Schreiberfunktion S als auch die Reglerfunktion R implementiert sind. Diese Implementierung kann sowohl hardwaremäßig, d. h. als elektronische oder mikroelektronische Schaltung, als auch softwaremäßig angelegt sein. Sowohl im einen wie auch im anderen Fall umfaßt die Verarbeitungseinheit in einer Ausgestaltungsform ein nichtflüchtiges Speicherelement (hier nicht weiter dargestellt). Dieses kann sowohl im Falle einer hardwaremäßigen Schreiber- und Reglerfunktionsauslegung als auch im Falle einer softwaremäßigen Schreiber- und Reglerfunkionsauslegung vorgesehen sein.

In diesem bzw. in diesen Speicherelement bzw. Speicherelementen kann bei softwaremäßiger Schreiber- und Reglerfunktionsauslegung das Schreiber- und das Reglerprogramm abgelegt sein und darüber hinaus die Möglichkeit der Meßdatenspeicherung oder Zwischenspeicherung geschaffen werden. Bei einer hardwaremäßigen Anlegung der Schreiber- und Reglerfunktionen kann das oder die Speicherelement(e) dann für das Ablegen von Signaldaten verwendet werden. Wichtig ist hierbei, daß egal nach welcher Auslegung der Schreiber- und Reglerfunktion innerhalb der Verarbeitungseinheit CPU, sowohl der Schreiber als auch der Regler von ein und demselben Erfassungssystem E gespeist werden. Der Ausgang des Schreibers bzw. der Schreiberfunktion an der Verarbeitungseinheit CPU liegt elektrisch an einem Ansteuerungs- bzw. Registriersystem T einer Schreibeinrichtung SE. Diese verstärkt, wenn nötig, noch die ausgegebenen elektrischen Signale und gibt diese direkt auf ein Schreibsystem SE, welches die Prozeßdaten auf ein Medium, wie Papier oder dergleichen, schreibt. Der Ausgang des Reglers R an der Verarbeitungseinheit CPU ist elektrisch mit dem Reglerausgang A des Gehäuses 1 verbunden. Der Reglerausgang kann dabei mit oder ohne Verstärker für die Stellsignale ausgestattet sein.

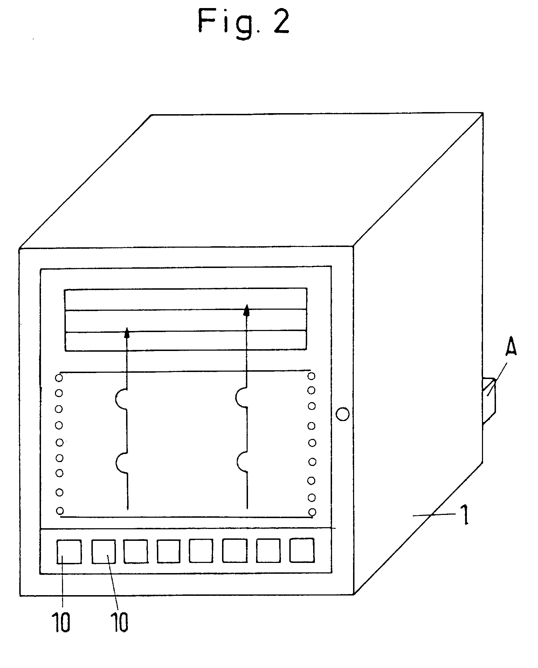

Figur 2 zeigt eine perspektivische Darstellung der Einrichtung bei der Verwendung in einem Prozeßschreiber. Sichtbar ist hier das Gehäuse 1, in welchem in erfindungsgemäßer Weise alle oben genannten Komponenten integriert sind. Desweiteren sind die Funktionstasten 10 sichtbar, über die in einer Ausgestaltungsmöglichkeit der Erfindung diverse mathematische Aufbereitungsfunktionen der Prozeßdaten angewählt werden können. Diese beeinflußen dann beispielsweise entweder die aufzuzeichnenden Daten oder die auszugebenen Stellsignale am Reglerausgang, oder beide.

Im letztgenannten Fall ergibt sich der Vorteil, daß sowohl die Beeinflußung der Schreibeinrichtung als auch die Beeinflußung der ausgegebenen Regelsignale über ein und dieselben Funktionstasten ansteuerbar bzw. beeinflußbar sind. Die Funktionstasten 10 stehen dabei gemäß Figur 1 in entsprechender funktionsmäßiger Verbindung zur Verarbeitungseinheit CPU. Die Signalbeeinflußung wird dort vorgenommen.

## Patentansprüche

1. Einrichtung zur Aufzeichnung von Prozeßdaten, mit einem Gehäuse, in welchem ein Erfassungssystem zur Entgegennahme der Prozeßdatensignale, eine Verarbeitungseinheit zur Verarbeitung bzw. Aufbereitung der Prozeßdatensignale, und eine Schreibeinrichtung zur Aufzeichnung der aufbereiteten Prozeßdaten angeordnet sind,
dadurch gekennzeichnet,
daß innerhalb des Gehäuses (1) ein Regler (R) integriert ist, welcher signalmäßig direkt mit dem Erfassungssystem (E) verbunden ist und daß das Gehäuse (1) mindestens einen Reglerausgang (A) für Stellsignale aufweist.

2. Einrichtung zur Aufzeichnung von Prozeßdaten nach Anspruch 1,
dadurch gekennzeichnet,
daß der Regler (R) in die Verarbeitungseinheit (CPU) integriert ist.

3. Einrichtung zur Aufzeichnung von Prozeßdaten nach Anspruch 2,
dadurch gekennzeichnet,
daß die Verarbeitungseinheit (CPU) eine elektronische zentrale Prozeßeinheit umfaßt, welche signalmäßig sowohl mit der Erfassungseinheit (E) als auch mit der Schreibeinrichtung (T) verbunden ist.

4. Einrichtung zur Aufzeichnung von Prozeßdaten nach Anspruch 3,
dadurch gekennzeichnet,
daß der Regler (R) innerhalb der elektronischen zentralen Prozeßeinheit (CPU) angelegt ist.

5. Einrichtung zur Aufzeichnung von Prozeßdaten nach Anspruch 3 oder Anspruch 4,
dadurch gekennzeichnet,
daß die Einrichtung mit dem Erfassungssystem (E) oder der Verarbeitungseinheit (CPU) elektrisch verbundene Funktionstasten (10) zur Auswahl diverser mathematischer Aufbereitungsfunktionen der Prozeßdaten enthält, über welche die aufzuzeichnenden undloder die am Reglerausgang (A) ausgegebenen Signale beeinflußbar sind.

6. Einrichtung zur Aufzeichnung von Prozeßdaten nach einem oder mehreren der vorhergehenden Ansprüche,
dadurch gekennzeichnet,
daß die Verarbeitungseinheit mindestens ein nichtflüchtiges Speicherelement aufweist.

7. Prozeßschreiber mit einer Einrichtung nach einem oder mehreren der vorhergehenden Ansprüche.

8. Prozeßregler mit einer Einrichtung nach einem oder mehreren der vorhergehenden Ansprüche.

## Claims

1. Device for recording process data, comprising a housing in which a detection system for receiving the process data signals, a processing unit for processing or preparing the process data signals, and a recording device for recording the prepared process data are disposed, characterised in that within the housing (1) a controller ( R) is integrated, which communicates with signals direct with the detection system (E) and in that the housing (1) has at least one controller output ( R) for actuating signals.

2. Device for recording process data according to claim 1, characterised in that the controller (R) is incorporated in the processing unit (CPU).

3. Device for recording process data according to claim 2, characterised in that the processing unit (CPU) comprises a central electronic processing unit, which is connected by signals both to the detection device (E) and to the recording device (T).

4. Device for recording process data according to claim 3, characterised in that the controller ( R) is applied within the central electronic processing unit (CPU).

5. Device for recording process data according to claim 3 or 4, characterised in that the device with the detection system (E) or the processing unit (CPU) comprises electrically connected function keys (10) for the selection of diverse mathematical preparation functions of the process data, via which the signals to be recorded and/or output at the controller output (A) are modifiable.

6. Device for recording process data according to one or more of the preceding claims, characterised in that the processing unit has at least one non-volatile storage element.

7. Process recorder with a device according to one or more of the preceding claims.

8. Process controller with a device according to one or more of the preceding claims.

## Revendications

1. Dispositif pour l'enregistrement de données de processus, comportant un habillage dans lequel il est agencé un système d'acquisition pour la réception des signaux de données de processus, une unité de traitement pour le traitement ou la préparation des signaux de données de processus et un dispositif enregistreur pour l'enregistrement des données de processus préparées,
caractérisé en ce qu'il est intégré à l'intérieur de l'habillage (1) un régulateur (R) qui est relié directement au système d'acquisition (E) pour les signaux et en ce que l'habillage (1) comporte au moins une sortie de régulateur (A) pour des signaux réglants.

2. Dispositif pour l'enregistrement de données de processus selon la revendication 1,
caractérisé en ce que le régulateur (R) est intégré dans l'unité de traitement (CPU).

3. Dispositif pour l'enregistrement de données de processus selon la revendication 2,
caractérisé en ce que l'unité de traitement (CPU) comprend une unité centrale électronique de processus qui est reliée pour les signaux aussi bien à l'unité d'acquisition (E) qu'au dispositif enregistreur (T).

4. Dispositif pour l'enregistrement de données de processus selon la revendication 3,
caractérisé en ce que le régulateur (R) est conçu à l'intérieur de l'unité centrale électronique de processus (CPU).

5. Dispositif pour l'enregistrement de données de processus selon la revendication 3 ou la revendication 4,
caractérisé en ce que le dispositif contient des touches de fonctions (10) qui sont reliées électriquement au système d'acquisition (E) ou à l'unité de traitement (CPU), qui sont destinées à la sélection de diverses fonctions mathématiques de préparation des données de processus et par l'intermédiaire desquelles les signaux à enregistrer et/ou les signaux délivrés à la sortie de régulateur (A) peuvent être influencés.

6. Dispositif pour l'enregistrement de données de processus selon une ou plusieurs des revendications précédentes,
caractérisé en ce que l'unité de traitement comporte au moins un élément formant mémoire non volatile.

7. Enregistreur de processus comportant un dispositif selon une ou plusieurs des revendications précédentes.

8. Régulateur de processus comportant un dispositif selon une ou plusieurs des revendications précédentes.
